# EUROPEAN PATENT SPECIFICATION

(11) **EP 4 238 791 B1**
(45) Date of publication and mention of the grant of the patent: **30.07.2025**
(21) Application number: 23159487.0
(22) Date of filing: 01.03.2023
(51) Int. Cl.: B60L 50/70, B60H 1/00, B60H 1/32

(54) **TRANSPORT REFRIGERATION UNIT WITH MULTIPLE VOLTAGE SOURCE ARRANGEMENTS**
TRANSPORTKÜHLEINHEIT MIT MEHREREN SPANNUNGSQUELLENANORDNUNGEN
UNITÉ DE RÉFRIGÉRATION DE TRANSPORT AVEC PLUSIEURS AGENCEMENTS DE SOURCE DE TENSION

(30) Priority: 01.03.2022 US 202263315285 P
(43) Date of publication of application: 06.09.2023
(73) Proprietor: Carrier Corporation, Palm Beach Gardens, FL 33418 (US)
(72) Inventor: SHE, Xu, Palm Beach Gardens, FL 33418 (US); PETERSON, Eric C., Farmington, CT 06032 (US); LINES, Michael, Palm Beach Gardens, FL 33418 (US); MAKWINSKI, Mark, Palm Beach Gardens, FL 33418 (US); VAN HASSEL, Bart Antonie, Palm Beach Gardens, FL 33418 (US); CHEN, Yu, Syracuse, NY 13221 (US)
(74) Representative: Dehns

(56) References cited:
- EP-A1- 3 674 115
- DE-A1- 102021 003 653
- US-A1- 2015 204 393
- US-A1- 2019 105 969
- US-B2- 10 618 426
- US-B2- 10 926 610

## Description

The following description relates to a transport refrigeration unit (TRU) and, more specifically, to a TRU with multiple voltage source arrangements.

Trailers are used to transport goods. Trailers typically have a rectangular shape and an empty interior that can be filled with various types of perishable and non-perishable goods. In some cases, those goods need to be maintained at a certain controlled temperature and in these cases, trailers can include refrigeration units, such as TRUs. A TRU for a trailer can cool or condition the air inside of the trailer so that the goods being transported can be refrigerated.

In conventional TRUs, energy to operate the TRU can be provided by fuel or batteries. More recently, fuel cells that use hydrogen to generate energy have been employed. US 2019/105969 discloses a transport refrigeration unit including a combustion engine of the unit driving a generator configured to provide electric power to a compressor motor. An energy storage device of the unit is configured to provide electric power to the condenser and evaporator fan motors. US 10926610 B2 discloses methods and systems for controlling energy source for a mild hybrid system that powers a transport climate control system are provided. The mild hybrid system includes a DC energy source configured to supply a first DC voltage to the transport climate control system. Other electrical component controls of trucks and/or refrigeration systems are disclosed in US 2015/204393, EP 3674115 and US 10618426.

According to a first aspect of the invention defined in claim 1, a transport refrigeration unit (TRU) system is provided and includes a high-voltage power source, a low-voltage power source, at least one of the high-voltage power source and the low-voltage power source including a fuel cell configured to provide electricity to the transport refrigeration unit, a first electrical load, which is powered by the high-voltage power source, a second electrical load, which is powered by the low-voltage power source and an electrical distribution system comprising a first linkage by which the high-voltage power source is directly electrically connected to the first electrical load and a second linkage by which the low-voltage power source is directly electrically connected to the second electrical load. The system comprises a voltage conversion unit electrically interposed between the first and second linkages and by which the high-voltage power source is selectively electrically connectable to the second electrical load and the low-voltage power source is selectively electrically connectable to the first electrical load, wherein the high-voltage power source and the low-voltage power source each comprise a fuel cell and the TRU system further comprises a tank storing cryo-compressed hydrogen gas for the high-voltage power source and the low-voltage power source.

The high-voltage power source may include a battery.

The high-voltage power source may be plural in number.

The low-voltage power source may include a battery.

The low-voltage power source may be plural in number.

The first electrical load may include at least a compressor motor.

The second electrical load may include at least one or more of an evaporator fan motor and a condenser fan motor.

At least the first electrical load may be controllable for optimized load operation.

The voltage conversion unit may be selectively engageable to allow for dynamic power allocation to at least one of the first electrical load and the second electrical load.

The voltage conversion unit may be selectively engageable for redundancy in an event of a fault in either the high-voltage power source or the low-voltage power source.

According to another aspect of the invention defined in claim 11, a method of operating a transport refrigeration unit (TRU) system according to the first aspect (optionally in combination with any of the optional features thereof) is provided and includes directly electrically connecting a high-voltage power source to a first electrical load, which is optimally powered by the high-voltage power source, directly electrically connecting a low-voltage power source to a second electrical load, which is optimally powered by the low-voltage power source and selectively engaging a voltage conversion unit to electrically connect the high-voltage power source to the second electrical load or to electrically connect the low-voltage power source to the first electrical load.

The selectively engaging of the voltage conversion unit may include at least one of selectively engaging the voltage conversion unit to allow for dynamic power allocation to at least one of the first electrical load and the second electrical load and selectively engaging the voltage conversion unit for redundancy in an event of a fault in either the high-voltage power source or the low-voltage power source.

These and other advantages and features will become more apparent from the following description taken in conjunction with the drawings.

The subject matter, which is regarded as the invention, is defined in the claims at the conclusion of the specification. The foregoing and other features and advantages of the invention are apparent from the following detailed description. Certain exemplary embodiments will now be described in greater detail, by way of example only, and with reference to the accompanying drawings, in which:
FIG. 1 depicts a tractor trailer system having a transport refrigeration unit and a cargo compartment ;
FIG. 2 depicts a transport refrigeration unit for a cargo compartment of the tractor trailer system of FIG. 1;
FIG. 3 is a schematic diagram of power sources for a transport refrigeration unit system;
FIG. 4 is a schematic diagram of power sources for a transport refrigeration unit system; and
FIG. 5 is a flow diagram illustrating a method of operating a transport refrigeration unit.

These and other advantages and features will become more apparent from the following description taken in conjunction with the drawings.

Fuel cells and batteries have been considered as primary power sources for electrified TRU applications. In these cases, the selection of voltage levels with certain components can sometimes become difficult. This is because different components inside of TRU systems may have different preferences of voltage levels in order to maximize the efficiency and minimize complexity. Thus, as will be described below, an electrical architecture is provided with hybrid voltage source combinations. Multiple power sources are included with some being high-voltage power sources for use with components that are better equipped to operate in high-voltage conditions and with some being low-voltage power sources for use with components that are better equipped to operate in low-voltage conditions. The high-voltage and low-voltage power sources can each include or be provided as fuel cells, battery packs or combinations thereof.

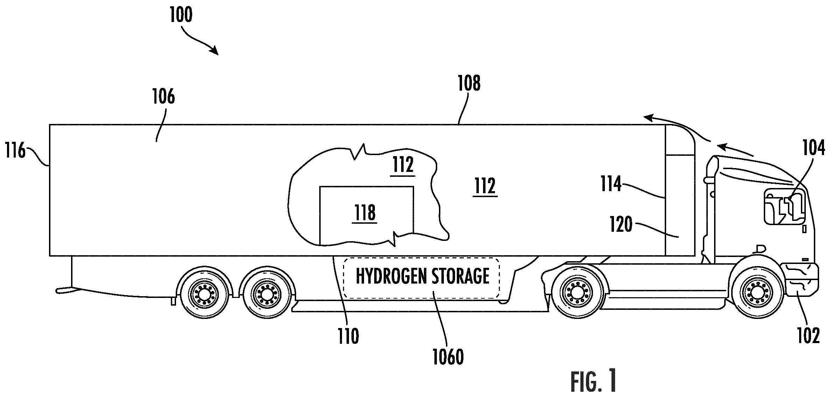

With reference to FIG. 1, a tractor trailer system 100 is provided. The tractor trailer system 100 includes a tractor 102 including an operator's compartment or cab 104 and an engine, which acts as the drive system of the tractor trailer system 100. A trailer 106 is coupled to the tractor 102. The trailer 106 is a refrigerated trailer 106 and includes a top wall 108, a directly opposed bottom wall 110, opposed side walls 112 and a front wall 114, with the front wall 114 being closest to the tractor 102. The trailer 106 further includes a door or doors (not shown) at a rear wall 116, opposite the front wall 114. The walls of the trailer 106 define a cargo compartment. The trailer 106 is configured to maintain a cargo 118 located inside the cargo compartment at a selected temperature through the use of a TRU 120 located on the trailer 106. The TRU 120, as shown in FIG. 1, can be located at or attached to the front wall 114. Although described herein that the transport refrigeration unit may be attached to a tractor trailer, it should be appreciated that the transport refrigeration unit described herein may be suitable for any refrigerated cargo system (e.g., tractor trailer, container, unit load device, etc.).

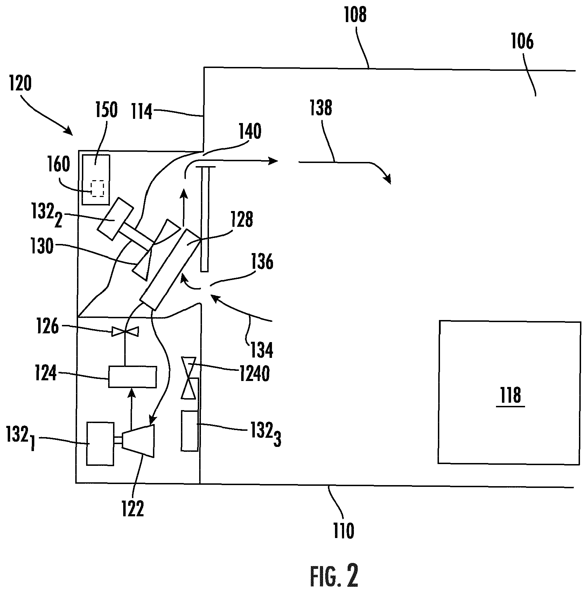

With reference to FIG. 2, the TRU 120 is shown in more detail. The TRU unit 120 includes a compressor 122, a condenser 124 with a condenser fan 1240, an expansion valve 126, an evaporator 128 and an evaporator fan 130. The compressor 122 is operably connected to a compressor motor 132₁, which is receptive of power and uses that power to drive the compressor 122. The evaporator fan 130 is operably connected to an evaporator fan motor 132₂, which is receptive of power and uses that power to drive the evaporator fan 130. The condenser fan 1240 is operably connected to a condenser fan motor 132₃, which is receptive of power and uses that power to drive the condenser fan 1240. Airflow is circulated into and through the cargo compartment of the trailer 106 by means of the TRU 120. A return airflow 134 flows into the TRU 120 from the cargo compartment of the trailer 106 through a refrigeration unit inlet 136 and across the evaporator 128 via the evaporator fan 130, thus cooling the return airflow 134. The cooled return airflow 134, now referred to as supply airflow 138, is supplied into the cargo compartment of the trailer 106 through a refrigeration unit outlet 140, which in some embodiments is located near the top wall 108 of the trailer 106. The supply airflow 138 cools the cargo 118 in the cargo compartment of the trailer 106. Also included in the cargo compartment can be a refrigerant leak sensor 150 for detecting a leak of a particular type of refrigerant or substance. It is to be understood that the refrigerant leak sensor 150 can be located in different locations in the system and is not limited by the example shown in FIG. 2. For example, the refrigerant leak sensor 150 can be located in the evaporator section of the TRU 120, a different portion of the cargo compartment of the trailer 106 or another location in the system. Upon detection by the refrigerant leak sensor 150, a signal can be transmitted to controller 160. The controller 160 controls various aspects of the TRU 120 and the TRU power system. The controller 160 can control the compressor 122, the condenser 124, the expansion valve 126, the evaporator 128 and the evaporator fan 130 in addiction to other equipment or sensors. The controller 160 can be connected to the equipment over a wired or wireless connection (connections not shown). In some cases, the controller 160 can be configured to perform a low charge diagnostics calculation which is used to perform various calculations of the refrigeration system of the TRU 120 to determine a state of operation. In other embodiments, the low charge diagnostics calculation can be performed in a cloud network (not shown in FIG. 2).

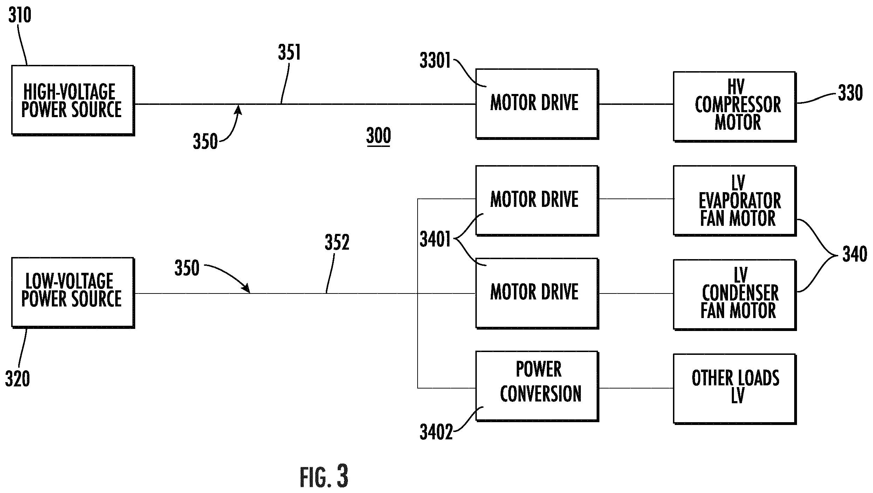

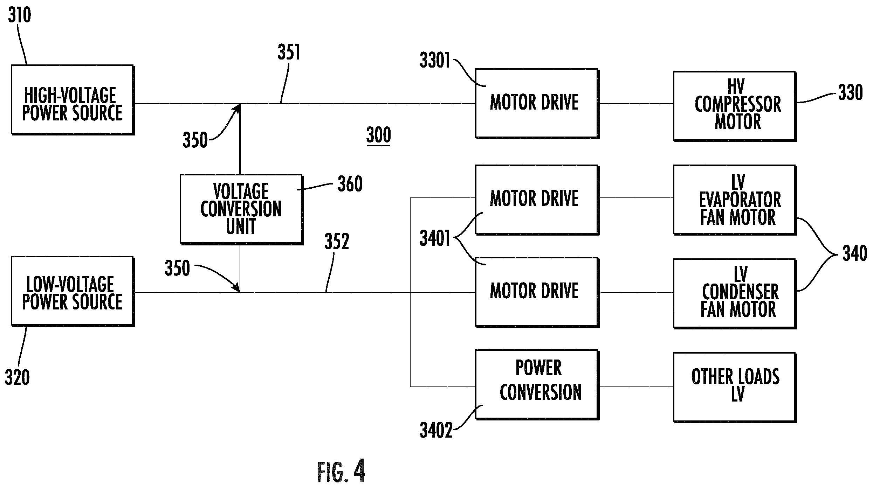

With reference to FIGS. 3 and 4, the TRU system 300 includes a high-voltage power source 310, a low-voltage power source 320, a first electrical load 330, which is powered by the high-voltage power source 310 and a second electrical load 340, which is powered by the low-voltage power source 320. The TRU system 300 further includes an electrical distribution system 350. The electrical distribution system 350 includes at least a first electrical linkage 351 by which the high-voltage power source 310 is directly electrically connected to the first electrical load 330 and at least a second electrical linkage 352 by which the low-voltage power source 320 is directly electrically connected to the second electrical load 340.

The high-voltage power source 310 can provide power greater than 50 V (e.g., 145-80V) and comprises a fuel cell. The low-voltage power source 320 can provide power of less than 50V, with a nominal output of about 48V, and comprises a fuel cell. Hydrogen for the fuel cells (i.e., cryo-compressed hydrogen gas) for the high-voltage power source 310 and the low-voltage power source 320 is stored in a tank 1060 (e.g., below the trailer 106 as shown in FIG. 1).

In some alternative embodiments, the high-voltage power source 310 can further include a battery and can be plural in number (i.e., there can be multiple high-voltage power sources 310, each being either a fuel cell or a battery but with at least one fuel cell). Similarly, in some other alternative embodiments, the low-voltage power source 320 can further include a battery and can be plural in number (i.e., there can be multiple low-voltage power sources 320, each being either a fuel cell or a battery but with at least one fuel cell). In the case of either the high-voltage power source 310 or the low-voltage power source 320 being plural in number, it is to be understood that space would need to be provided in or on the refrigerated cargo system (e.g., the trailer 106 of FIG. 2).

In those cases where the high-voltage power source 310 or the low-voltage power source 320 is provided as a battery, the TRU system 300 can further include a charging element configured to recharge the battery. The structure and connections to such a charging element would be understood by a person of ordinary skill in the art.

In accordance with embodiments, and for exemplary purposes, the first electrical load 330 can include or be provided as a compressor motor, such as the compressor motor 132₁ of FIG. 2, which may be a high-voltage load and which may be optimally powered by the high-voltage power source 310. In these or other cases, a fixed or variable speed motor drive 3301 can be electrically interposed between the high-voltage power source 310 and the compressor motor 132₁. In an exemplary case, the fixed or variable speed motor drive 3301 can provide compatibility between the high-voltage power source 310 and the compressor motor 132₁ where the compressor motor 132₁ operates with alternating current (AC) at 460V/3P/60Hz or 400V/3P/50 Hz and a fuel cell serving as the high-voltage power source 310 generates power with direct current (DC) at 145-80V.

In accordance with embodiments, the second electrical load 340 can include or be provided as one or more of an evaporator fan motor and a condenser fan motor, such as the evaporator fan motor 132₂ and the condenser fan motor 132₃ of FIG. 2, which may be optimally powered by the low-voltage power source 310, as well as other low-voltage loads. As above, in these or other cases, fixed or variable speed motor drives 3401 can be electrically interposed between the low-voltage power source 320 and the evaporator fan motor 132₂ and the condenser fan motor 132₃. In addition, a power conversion unit 3402 can be electrically interposed between the low-voltage power source 320 and the other low-voltage loads. In an exemplary case, the fixed or variable speed motor drive 3401 can provide compatibility between the low-voltage power source 320 and the evaporator fan motor 132₂ and the condenser fan motor 132₃.

In accordance with embodiments, at least the first electrical load 330 can be controllable for optimized load operation. In these or other cases, in the exemplary case where the first electrical load 330 is the compressor motor 132₁ of FIG. 2 and the TRU system 300 further includes the fixed or variable speed motor drive 3301, the fixed or variable speed motor drive 3301 can be configured to control an operation of the compressor motor 132₁ to spin up or ramp down the compressor 122 of FIG. 2 in a manner that is optimized for current conditions and for available power from the high-voltage power source 310 (and the low-voltage power source 320) and in a manner that is optimally energy efficient.

A shown in FIG. 4, the TRU system 300 includes a voltage conversion unit 360.

The voltage conversion unit 360 is electrically interposed between the first electrical linkage 351 and the second electrical linkage 352. The voltage conversion unit 360 is selectively engageable so that the high-voltage power source 310 can be selectively electrically connectable to the second electrical load 340 and so that the low-voltage power source 320 can be selectively electrically connectable to the first electrical load 330. As such, the voltage conversion unit 360 is selectively engageable to allow for dynamic power allocation to at least one of the first electrical load 330 and the second electrical load 340. That is, in the exemplary case where the first electrical load 330 is the compressor motor 132₁ of FIG. 2 and is being controlled for optimized load operation, the voltage conversion unit 360 can be selectively engaged to connect the low-voltage power source to the compressor motor 132₁ for at least as long as the optimized load operation is in effect. In these or other instances, the connection between the high-voltage power source 310 and the compressor motor 132₁ may be maintained though the high-voltage power source 310 may be otherwise prevented from providing power to the compressor motor 132₁. In addition, the voltage conversion unit 360 can be selectively engageable for redundancy in an event of a fault in either the high-voltage power source 310 or the low-voltage power source 320 which prevents the faulty power source from providing power to an electrical load for which it would otherwise provide power.

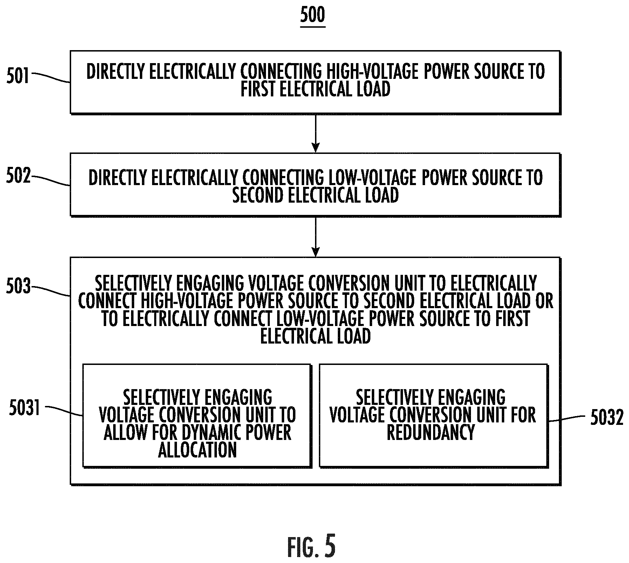

With reference to FIG. 5, a method 500 of operating TRU system, such as the TRU system 300 of FIGS. 3 and 4, is provided. The method 500 includes directly electrically connecting a high-voltage power source to a first electrical load, which is powered by the high-voltage power source (block 501), directly electrically connecting a low-voltage power source to a second electrical load, which is powered by the low-voltage power source (block 502) and selectively engaging a voltage conversion unit to electrically connect the high-voltage power source to the second electrical load or to electrically connect the low-voltage power source to the first electrical load (block 503). In accordance with embodiments, the selectively engaging of the voltage conversion unit of block 503 includes at least one of selectively engaging the voltage conversion unit to allow for dynamic power allocation to at least one of the first electrical load and the second electrical load (block 5031) and selectively engaging the voltage conversion unit for redundancy in an event of a fault in either the high-voltage power source or the low-voltage power source (block 5032).

Technical effects and benefits of the present invention are the provision of a TRU system with a reduced number of power conversion components that provides for increased efficiency as well as minimized complexity and minimized use of space for an electrical system.

While the invention is provided in detail in connection with only a limited number of embodiments, it should be readily understood that the invention is not limited to such disclosed embodiments. Accordingly, the invention is not to be seen as limited by the foregoing description, but is only limited by the scope of the appended claims.

## Claims

1. A transport refrigeration unit (TRU) system (300), comprising:
a high-voltage power source (310);
a low-voltage power source (320), at least one of the high-voltage power source (310) and the low-voltage power source (320) comprising a fuel cell configured to provide electricity to the transport refrigeration unit (120);
a first electrical load (330), which is powered by the high-voltage power source (310);
a second electrical load (340), which is powered by the low-voltage power source (320); and
an electrical distribution system (350) comprising a first linkage (351) by which the high-voltage power source (310) is directly electrically connected to the first electrical load (330) and a second linkage by which the low-voltage power source (320) is directly electrically connected to the second electrical load (340); and
a voltage conversion unit (360) electrically interposed between the first and second linkages (351, 352) and by which the high-voltage power source (310) is selectively electrically connectable to the second electrical load (340) and the low-voltage power source (320) is selectively electrically connectable to the first electrical load (330),
**characterised in that** the high-voltage power source (310) and the low-voltage power source (320) each comprise a fuel cell and the TRU system further comprises a tank storing cryo-compressed hydrogen gas for the high-voltage power source (310) and the low-voltage power source (320).

2. The TRU system (300) according to claim 1, wherein the high-voltage power source (310) further comprises a battery.

3. The TRU system (300) according to claim 1 or 2, wherein the high-voltage power source (310) is plural in number.

4. The TRU system (300) according to claim 1, 2 or 3, wherein the low-voltage power source (320) further comprises a battery.

5. The TRU system (300) according to any preceding claim, wherein the low-voltage power source (320) is plural in number.

6. The TRU system (300) according to any preceding claim, wherein the first electrical load (330) comprises at least a compressor motor (132₁).

7. The TRU system (300) according to any preceding claim, wherein the second electrical load (340) comprises at least one or more of an evaporator fan motor (132₂) and a condenser fan motor (132₁).

8. The TRU system (300) according to any preceding claim, wherein at least the first electrical load (330) is controllable for optimized load operation.

9. The TRU system (300) according to any preceding claim, wherein the voltage conversion unit (360) is selectively engageable to allow for dynamic power allocation to at least one of the first electrical load (330) and the second electrical load (340).

10. The TRU system (300) according to any preceding claim, wherein the voltage conversion unit (360) is selectively engageable for redundancy in an event of a fault in either the high-voltage power source (310) or the low-voltage power source (320).

11. A method (500) of operating a transport refrigeration unit (TRU) system (300) as claimed in any of claim 1 to 10, the method (500) comprising:
directly electrically connecting (501) the high-voltage power source (310) to the first electrical load (330), which is powered by the high-voltage power source (310);
directly electrically connecting (502) the low-voltage power source (320) to the second electrical load (340), which is powered by the low-voltage power source (320); and
selectively engaging (503) the voltage conversion unit (360) to electrically connect the high-voltage power source (310) to the second electrical load (340) or to electrically connect the low-voltage power source (320) to the first electrical load (330).

12. The method (500) according to claim 11, wherein the selectively engaging (503) of the voltage conversion unit (360) comprises at least one of:
selectively engaging (5031) the voltage conversion unit (360) to allow for dynamic power allocation to at least one of the first electrical load (330) and the second electrical load (340); and
selectively engaging (5032) the voltage conversion unit (360) for redundancy in an event of a fault in either the high-voltage power source (310) or the low-voltage power source (320).

## Patentansprüche

1. Transportkühleinheits-(TRU-)System (300), umfassend:
eine Hochspannungs-Stromquelle (310);
eine Niederspannungs-Stromquelle (320), wobei mindestens eine der Hochspannungs-Stromquelle (310) und der Niederspannungs-Stromquelle (320) eine Brennstoffzelle umfasst, die so konfiguriert ist, dass sie der Transportkühleinheit (120) Strom bereitstellt;
eine erste elektrische Last (330), die von der Hochspannungs-Stromquelle (310) gespeist wird;
eine zweite elektrische Last (340), die von der Niederspannungs-Stromquelle (320) gespeist wird; und
ein elektrisches Verteilungssystem (350), das eine erste Verbindung (351) umfasst, durch die die Hochspannungs-Stromquelle (310) direkt elektrisch mit der ersten elektrischen Last (330) verbunden ist, und eine zweite Verbindung, durch die die Niederspannungs-Stromquelle (320) direkt elektrisch mit der zweiten elektrischen Last (340) verbunden ist; und
eine Spannungsumwandlungseinheit (360), die zwischen der ersten und zweiten Verbindungen (351, 352) elektrisch zwischengeschaltet ist und durch die die Hochspannungs-Stromquelle (310) selektiv elektrisch verbindbar mit der zweiten elektrischen Last (340) und die Niederspannungs-Stromquelle (320) selektiv elektrisch verbindbar mit der ersten elektrischen Last (330) ist,
**dadurch gekennzeichnet, dass** die Hochspannungs-Stromquelle (310) und die Niederspannungs-Stromquelle (320) jeweils eine Brennstoffzelle umfassen und das TRU-System ferner einen Tank umfasst, der kryokomprimiertes Wasserstoffgas für die Hochspannungs-Stromquelle (310) und die Niederspannungs-Stromquelle (320) speichert.

2. TRU-System (300) nach Anspruch 1, wobei die Hochspannungs-Stromquelle (310) ferner eine Batterie umfasst.

3. TRU-System (300) nach Anspruch 1 oder 2, wobei die Hochspannungs-Stromquelle (310) in mehrfacher Ausführung ist.

4. TRU-System (300) nach Anspruch 1, 2 oder 3, wobei die Niederspannungs-Stromquelle (320) ferner eine Batterie umfasst.

5. TRU-System (300) nach einem der vorhergehenden Ansprüche, wobei die Niederspannungs-Stromquelle (320) in mehrfacher Ausführung ist.

6. TRU-System (300) nach einem der vorhergehenden Ansprüche, wobei die erste elektrische Last (330) mindestens einen Kompressormotor (132₁) umfasst.

7. TRU-System (300) nach einem der vorhergehenden Ansprüche, wobei die zweite elektrische Last (340) mindestens einen oder mehrere Verdampfer-Lüftermotor (132₂) und einen Kondensator-Lüftermotor (132₁) umfasst.

8. TRU-System (300) nach einem der vorhergehenden Ansprüche, wobei mindestens die erste elektrische Last (330) für einen optimierten Lastbetrieb steuerbar ist.

9. TRU-System (300) nach einem der vorhergehenden Ansprüche, wobei die Spannungsumwandlungseinheit (360) selektiv einschaltbar ist, um eine dynamische Leistungszuweisung an mindestens eine der ersten elektrischen Last (330) und der zweiten elektrischen Last (340) zu ermöglichen.

10. TRU-System (300) nach einem der vorhergehenden Ansprüche, wobei die Spannungsumwandlungseinheit (360) im Falle eines Fehlers in der Hochspannungs-Stromquelle (310) oder in der Niederspannungs-Stromquelle (320) zur Redundanz selektiv einschaltbar ist.

11. Verfahren (500) zum Betreiben eines Transportkühleinheits-(TRU-)Systems (300) nach einem der Ansprüche 1 bis 10, wobei das Verfahren (500) umfasst:
direktes elektrisches Verbinden (501) der Hochspannungs-Stromquelle (310) mit der ersten elektrischen Last (330), die von der Hochspannungs-Stromquelle (310) gespeist wird;
direktes elektrisches Verbinden (502) der Niederspannungs-Stromquelle (320) mit der zweiten elektrischen Last (340), die von der Niederspannungs-Stromquelle (320) gespeist wird; und
selektives Einschalten (503) der Spannungsumwandlungseinheit (360), um die Hochspannungs-Stromquelle (310) mit der zweiten elektrischen Last (340) elektrisch zu verbinden oder die Niederspannungs-Stromquelle (320) mit der ersten elektrischen Last (330) elektrisch zu verbinden.

12. Verfahren (500) nach Anspruch 11, wobei das selektive Einschalten (503) der Spannungsumwandlungseinheit (360) mindestens eines der folgenden Elemente umfasst:
selektives Einschalten (5031) der Spannungsumwandlungseinheit (360) um eine dynamische Leistungszuweisung an mindestens eine der ersten elektrischen Last (330) und der zweiten elektrischen Last (340) zu ermöglichen; und
selektives Einschalten (5032) der Spannungsumwandlungseinheit (360) zur Redundanz im Falle eines Fehlers in der Hochspannungs-Stromquelle (310) oder in der Niederspannungs-Stromquelle (320).

## Revendications

1. Système d'unité de réfrigération de transport (TRU) (300), comprenant :
une source d'alimentation haute tension (310) ;
une source d'alimentation basse tension (320), au moins l'une de la source d'alimentation haute tension (310) et de la source d'alimentation basse tension (320) comprenant une pile à combustible configurée pour fournir de l'électricité à l'unité de réfrigération de transport (120) ;
une première charge électrique (330), qui est alimentée par la source d'alimentation haute tension (310) ;
une seconde charge électrique (340), qui est alimentée par la source d'alimentation basse tension (320) ; et
un système de distribution électrique (350) comprenant une première liaison (351) par laquelle la source d'alimentation haute tension (310) est directement connectée électriquement à la première charge électrique (330) et une seconde liaison par laquelle la source d'alimentation basse tension (320) est directement connectée électriquement à la seconde charge électrique (340) ; et
une unité de conversion de tension (360) électriquement intercalée entre les première et seconde liaisons (351, 352) et par laquelle la source d'alimentation haute tension (310) peut être connectée électriquement de manière sélective à la seconde charge électrique (340) et la source d'alimentation basse tension (320) peut être connectée électriquement de manière sélective à la première charge électrique (330),
**caractérisé en ce que** la source d'alimentation haute tension (310) et la source d'alimentation basse tension (320) comprennent chacune une pile à combustible et le système de TRU comprend également un réservoir stockant de l'hydrogène gazeux cryocom-primé pour la source d'alimentation haute tension (310) et la source d'alimentation basse tension (320).

2. Système de TRU (300) selon la revendication 1, dans lequel la source d'alimentation haute tension (310) comprend également une batterie.

3. Système de TRU (300) selon la revendication 1 ou 2, dans lequel la source d'alimentation haute tension (310) est présente en plusieurs exemplaires.

4. Système de TRU (300) selon la revendication 1, 2 ou 3, dans lequel la source d'alimentation basse tension (320) comprend également une batterie.

5. Système de TRU (300) selon une quelconque revendication précédente, dans lequel la source d'alimentation basse tension (320) est présente en plusieurs exemplaires.

6. Système de TRU (300) selon une quelconque revendication précédente, dans lequel la première charge électrique (330) comprend au moins un moteur de compresseur (132₁).

7. Système de TRU (300) selon une quelconque revendication précédente, dans lequel la seconde charge électrique (340) comprend au moins l'un ou plusieurs d'un moteur de ventilateur d'évaporateur (132₂) et d'un moteur de ventilateur de condenseur (132₁).

8. Système de TRU (300) selon une quelconque revendication précédente, dans lequel au moins la première charge électrique (330) peut être commandée pour un fonctionnement de charge optimisé.

9. Système de TRU (300) selon une quelconque revendication précédente, dans lequel l'unité de conversion de tension (360) peut être enclenchée de manière sélective pour permettre une allocation dynamique de puissance à au moins l'une de la première charge électrique (330) et de la seconde charge électrique (340).

10. Système de TRU (300) selon une quelconque revendication précédente, dans lequel l'unité de conversion de tension (360) peut être enclenchée de manière sélective pour la redondance en cas de défaillance dans la source d'alimentation haute tension (310) ou dans la source d'alimentation basse tension (320).

11. Procédé (500) de fonctionnement d'un système d'unité de réfrigération de transport (TRU) (300) selon l'une quelconque des revendications 1 à 10, le procédé (500) comprenant :
la connexion électrique directe (501) de la source d'alimentation haute tension (310) à la première charge électrique (330), qui est alimentée par la source d'alimentation haute tension (310) ;
la connexion électrique directe (502) de la source d'alimentation basse tension (320) à la seconde charge électrique (340), qui est alimentée par la source d'alimentation basse tension (320) ; et
l'enclenchement sélectif (503) de l'unité de conversion de tension (360) pour connecter électriquement la source d'alimentation haute tension (310) à la seconde charge électrique (340) ou pour connecter électriquement la source d'alimentation basse tension (320) à la première charge électrique (330).

12. Procédé (500) selon la revendication 11, dans lequel l'enclenchement sélectif (503) de l'unité de conversion de tension (360) comprend au moins l'un de :
l'enclenchement sélectif (5031) de l'unité de conversion de tension (360) pour permettre une allocation dynamique de puissance à au moins l'une de la première charge électrique (330) et de la seconde charge électrique (340) ; et
l'enclenchement sélectif (5032) de l'unité de conversion de tension (360) pour la redondance en cas de défaillance dans la source d'alimentation haute tension (310) ou dans la source d'alimentation basse tension (320).
